(19) **Europäisches Patentamt / European Patent Office / Office européen des brevets**

(11) **EP 3 517 991 B1**

(12) ## EUROPEAN PATENT SPECIFICATION

(45) Date of publication and mention
of the grant of the patent:
**30.10.2024 Bulletin 2024/44**

(21) Application number: **17852987.1**

(22) Date of filing: **15.09.2017**

(51) International Patent Classification (IPC):
**G01S 3/802** (2006.01)   **G01H 3/00** (2006.01)
**G01S 7/56** (2006.01)   **G01H 3/12** (2006.01)

(52) Cooperative Patent Classification (CPC):
**G01H 3/125; G01H 3/00; G01S 3/802; G01S 7/56**

(86) International application number:
**PCT/JP2017/033480**

(87) International publication number:
**WO 2018/056214 (29.03.2018 Gazette 2018/13)**

(54) **ULTRASOUND WAVE SOURCE AZIMUTH ORIENTING DEVICE, AND METHOD OF ANALYZING SUPERIMPOSED IMAGE**

ULTRASCHALLWELLENQUELLEN-AZIMUT-AUSRICHTUNGSVORRICHTUNG UND VERFAHREN ZUR ANALYSE EINES ÜBERLAGERTEN BILDES

DISPOSITIF D'ORIENTATION D'AZIMUT DE SOURCE D'ONDES ULTRASONORES, ET PROCÉDÉ D'ANALYSE D'IMAGE SUPERPOSÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2016 JP 2016185348**

(43) Date of publication of application:
**31.07.2019 Bulletin 2019/31**

(73) Proprietors:
• **JFE Steel Corporation
Tokyo 100-0011 (JP)**
• **JFE Advantech Co. Ltd.
Nishinomiya-shi, Hyogo 663-8202 (JP)**

(72) Inventors:
• **HAYASHI Koji
Tokyo 100-0011 (JP)**
• **SUENAGA Kiyoka
Tokyo 100-0011 (JP)**
• **MAEKAWA Shonosuke
Tokyo 100-0011 (JP)**
• **ODA Masahiro
Nishinomiya-shi
Hyogo 663-8202 (JP)**

• **OGUNI Michihiro
Nishinomiya-shi
Hyogo 663-8202 (JP)**
• **KUSHIDA Yasuo
Nishinomiya-shi
Hyogo 663-8202 (JP)**

(74) Representative: **Grünecker Patent- und
Rechtsanwälte
PartG mbB
Leopoldstraße 4
80802 München (DE)**

(56) References cited:
WO-A1-2016/100460   CN-A- 104 883 482
JP-A- 2007 127 503   JP-A- 2007 127 503
JP-A- 2009 075 086   JP-A- 2009 075 086
JP-A- 2010 061 409   JP-A- 2013 015 468
JP-A- 2013 525 776   KR-B1- 101 522 996

• **RIKA ISHIDA: "Development of a
ultrasound-camera visualization of unhearable
ultrasound", CHUBU ELECTRIC POWER CO.,
INC. GIJUTSU KAIHATSU NEWS, no. 153, August
2015 (2015-08-01), pages 31 - 32, XP009517506**

**EP 3 517 991 B1**

**Description**

Technical Field

The present invention relates to an ultrasound source azimuth determining apparatus that is compact and less prone to making erroneous determinations caused by grating lobes, and also relates to a composite image analyzing method performed using the ultrasound source azimuth determining apparatus.

Background Art

In steel plants, for example, it is necessary to promptly detect the occurrence of corrosion pits in pipes and deterioration of electrical facilities, and then carry out repair and other works. The detection often involves measuring sound waves emitted when a gas leaks through the corrosion pits in pipes or when corona discharge occurs in the electrical facilities. Measurement of sound waves in the audible range is significantly affected, for example, by ambient noise. Since this may interfere with accurate detection of abnormalities, ultrasound is typically measured to detect abnormalities in various facilities.

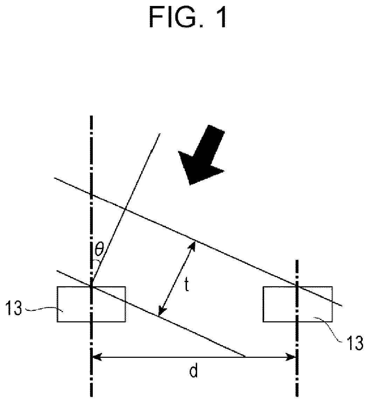

A technique has been known in which, for the purpose of determining the incoming direction of waves, such as sound waves including ultrasound or electromagnetic waves, a plurality of sensors are used to determine the azimuth of a wave source from a time difference (phase difference) between signals received by the sensors. For example, as illustrated in Fig. 1, a time difference, t (in seconds), between the times when waves reach two sensors 13 is determined by the following formula (1), where d (mm) is the spacing between the two sensors 13, and $\theta$ is the angle of a wave incoming direction (indicated by a thick arrow in the drawing) with respect to the front direction of the sensor 13. The wave incoming direction, $\theta$, is identified using t.

$$t = dsin\theta/(sound\ speed) \qquad \cdots\cdots (1)$$

The technique used in practice to determine a wave source azimuth by applying the formula (1) described above may generally be called beamforming. For a predetermined wave incoming direction, $\theta_0$, with respect to the front direction of a sensor, beamforming delays one sensor signal by a propagation delay time ($t_0$) calculated from the angle ($\theta_0$) and adds the delayed sensor signal to the other sensor signal. When $\theta_0$ coincides with the wave source azimuth, the waveforms of the sensors are in phase. Superimposition of waves is thus maximized, and $\theta_0$ is regarded as the wave source azimuth. Although the description above refers to using two sensors, the same principle may be applied to the case of using three or more sensors to determine the wave source azimuth. By performing this processing for all azimuths of the measured object, the wave source azimuth can be determined from the signal intensity and distribution.

For example, Patent Literature 1 discloses a technique that uses beamforming.

At the same time, ultrasound detecting apparatuses have been known, which measure the sound pressure of ultrasound using a sensor, such as a microphone or receiving element, to detect, for example, gas leakage from pipes or corona discharge in electrical facilities. The ultrasound detecting apparatuses of this type typically use one sensor.

Other examples of ultrasound detecting apparatuses are provided by KR 10 1522996 B1, which discloses a composite video output device for nondestructive inspection using a composite sensor consisting of an actual image camera, a thermal image camera, and sound and ultrasonic wave array, CN 104883482 A, which discloses a multi-channel ultrasonic acoustic camera for mechanical state monitoring, and JP 2007 127503, which object location detection apparatus, which receives reflected waves reflected by an object at array elements for detecting the location of the object.

Citation List

Patent Literature

PTL 1: Japanese Unexamined Patent Application Publication No. 2014-137323

Non Patent Literature

NPL 1: Rika ISHIDA, "Development of "Ultrasound Camera": Visualization of Ultrasound Emitted by Devices", Denki Genba Gijutsu, March 2015

## Summary of Invention

Technical Problem

Since a conventional ultrasound detecting apparatus measures ultrasound using one microphone, a region for which ultrasound can be measured at one time depends on the directivity of the microphone, and the azimuth from which ultrasound arrives is unknown. Accordingly, a sound collector, such as a parabola, is used to enhance the sensitivity and directivity of the microphone. However, although it is possible in this case to determine the incoming direction of ultrasound, measurement of ultrasound can be made only within a dot-like region. To perform ultrasound measurement on a facility to be measured using this apparatus, a desired range of measurement needs to be finely scanned by the ultrasound detecting apparatus many times. This not only makes the measurement work complex, but also makes it more likely that measurement omissions will occur.

Accordingly, there has been a demand for ultrasound detecting apparatuses capable of thoroughly searching for ultrasound sources in a planar area over a wider measurement range by means of beamforming which involves using a plurality of microphones. However, applying beamforming to ultrasound measurement is difficult due to the following reasons.

Using beamforming may cause so-called grating lobes, where significant aliasing is observed at azimuths different from the azimuth of an actual sound source. The grating lobes are a phenomenon in which, in a composite image (described in detail below), a region where a high sound pressure is recorded appears at a position where no sound source exists. The occurrence of grating lobes becomes more likely as the spacing between receiving elements becomes larger relative to the wavelength of sound waves to be measured. To completely prevent the occurrence of grating lobes, satisfying the following formula (2) to avoid superimposition of out-of-phase waves is effective.

$$d < \lambda/2 \quad \cdots\cdots \quad (2)$$

In the formula (2), d is the spacing (mm) between receiving elements and $\lambda$ is the wavelength (mm) of detected sound waves.

Using beamforming to search for ultrasound sources may result in significant determination errors caused by grating lobes, and it is difficult to determine the azimuth of an actual sound source. This is because since ultrasound has a higher frequency and a shorter wavelength ($\lambda$) than sound waves in the audible range, it is difficult to make the spacing between receiving elements small relative to the wavelength.

For example, the frequency band of ultrasound used to detect abnormalities in a facility and the sound speed in air are set to 40 kHz and 340 m/second, respectively, and substituting them in the formula (2) yields $\lambda/2 = 4.2$ (mm). That is, to completely prevent the occurrence of grating lobes, the microphone spacing needs to be less than 4.2 mm. Making the microphone spacing less than 4.2 mm automatically requires that the diameter of the microphones be less than 4.2 mm. However, it is difficult in practice to prepare microphones of such a small size.

To solve this problem, Non Patent Literature 1 presents a sensor unit in which three ultrasound microphones with a small tip diameter are bundled together and brought as close as possible to one another. With this structure, however, it is difficult to increase the number of microphones. For beamforming, the directivity is wide and this makes it difficult to improve accuracy in azimuth determination.

If the microphone spacing does not satisfy the formula (2), the occurrence of grating lobes becomes more likely as the search range for measuring ultrasound at one time is widened by using a plurality of microphones.

In the conventional technique, when beamforming, which involves using a plurality of microphones, is used to determine the azimuth of an ultrasound source with a short wavelength, the occurrence of grating lobes cannot be suppressed and it is difficult to correctly identify the azimuth of the sound source.

Additionally, for signal processing of ultrasound with higher frequencies, received ultrasound needs to be sampled at high speed. However, with beamforming, which typically involves using many receiving elements, it is difficult to achieve both high-speed sampling and updating the result of signal processing at a sufficient rate.

The present invention has been conceived in view of the problems described above. An object of the present invention is to provide an ultrasound source azimuth determining apparatus that is compact and capable of measuring ultrasound over a wide search range at one time while reducing the effect of grating lobes, and achieves a practically sufficient level of azimuth determination accuracy and a practically sufficient rate of updating the processing result, and to also provide a composite image analyzing method performed using the ultrasound source azimuth determining apparatus.

Solution to Problem

The present invention provides an ultrasound source azimuth determining apparatus as defined in independent claim 1, an analyzing method for a composite image as defined in independent claim 3 and a composite image analyzing method for analyzing a composite image as defined in independent claim 4.

Advantageous Effects of Invention

The present invention provides convenience of portability based on compactness, reduces the effect of grating lobes to achieve accurate identification of ultrasound sources, and enables ultrasound measurement within a wide planar field of view.

Brief Description of Drawings

[Fig. 1] Fig. 1 is an explanatory diagram related to beamforming.
[Fig. 2] Fig. 2 provides a front view, a back view, and a side view illustrating a general configuration of an azimuth determining apparatus.
[Fig. 3] Fig. 3 is an explanatory diagram illustrating how a camera's field of view and an array sensor's search range in the azimuth determining apparatus relate to a measured object.
[Fig. 4] Fig. 4 provides plan views each illustrating an arrangement of sensors in an array sensor.
[Fig. 5] Fig. 5 is a graph showing a relation between a grating lobe boundary azimuth and nondimensional sensor spacing.
[Fig. 6] Fig. 6 is an explanatory diagram of a composite image.
[Fig. 7] Fig. 7 is an explanatory diagram illustrating a composite image analyzing method.
[Fig. 8] Fig. 8 is an explanatory diagram illustrating another composite image analyzing method.
[Fig. 9] Fig. 9 illustrates a composite image obtained in Example 1.
[Fig. 10] Fig. 10 provides enlarged views of composite images obtained in Example 2.
[Fig. 11] Fig. 11 is an analysis diagram for a composite image obtained in Example 3.
[Fig. 12] Fig. 12 is an analysis diagram for the composite image obtained in Example 3.
[Fig. 13] Fig. 13 is another analysis diagram for the composite image obtained in Example 3.

Description of Embodiments

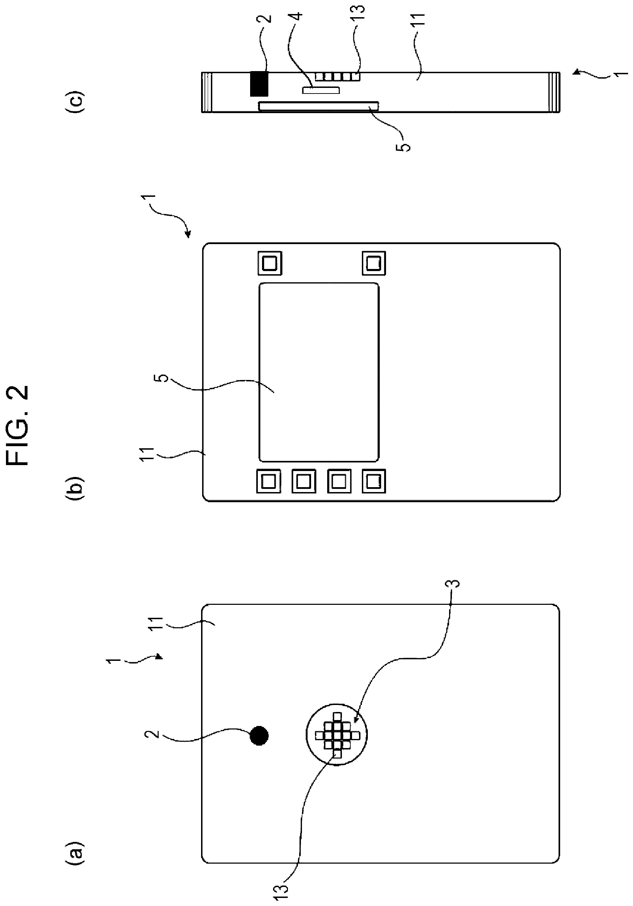

Fig. 2 provides a front view, a back view, and a side view illustrating a general configuration of an azimuth determining apparatus. An ultrasound source azimuth determining apparatus 1 (which may hereinafter be simply referred to as "azimuth determining apparatus") according to the present embodiment will be first described using Fig. 2.
The azimuth determining apparatus 1 according to the present embodiment includes a camera 2, an array sensor 3, a computing means 4, and a display means 5. In the example of Fig. 2, as in Fig. 2(a), the camera 2 and the array sensor 3 are disposed on the front side of a housing 11 included in the azimuth determining apparatus 1. Also, as illustrated in Fig. 2(c), the computing means 4 is disposed inside the housing 11, and as illustrated in Fig. 2(b), the display means 5 is disposed on the back side of the housing 11. The computing means 4 may be disposed outside the housing 11.
The camera 2 picks up an image of a measured object and outputs the picked-up image to the computing means 4. The picked-up image is used for being superimposed with a two-dimensional sound pressure map of ultrasound obtained by beamforming. The magnification and the field of view of the camera 2 can be appropriately adjusted, for example, in accordance with the desired size of a composite image. The camera 2 used here may be, for example, a commercially available CCD camera.
The array sensor 3 is formed by a plurality of surface mount sensors (hereinafter described as "sensors") 13 for ultrasound measurement. The array sensor 3 measures ultrasound originating from a direction in which the array sensor 3 is directed, and acquires sound pressure information. The sensors 13 are, for example, surface-soldered onto a printed circuit board. The sensors 13 are as small as about half the size of typical ultrasound microphones and can be densely mounted.

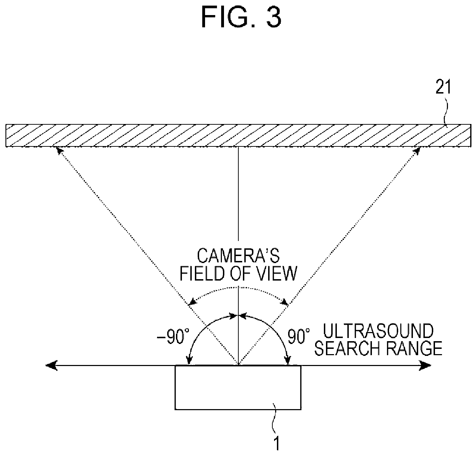

Fig. 3 is an explanatory diagram illustrating how a camera's field of view and an array sensor's search range in the azimuth determining apparatus relate to a measured object. A search range of the array sensor 3 will now be described using Fig. 3. As indicated by a solid arrow in the drawing, the array sensor 3 can measure the sound pressure of ultrasound within the range of +90° to -90° in the horizontal (right-left) direction. Fig. 3 is a plan view as viewed from above the azimuth determining apparatus 1, and the same applies to a side view as viewed from the right side (or left side) of the azimuth determining apparatus 1. That is, the array sensor 3 can also measure ultrasound within the range of +90° to -90° in the vertical (up-down) direction. Although the arrangement and spacing of the sensors 13 in the array sensor 3 will be described later on, the incoming direction and the sound pressure of ultrasound can be measured by using the principle of beamforming for a plurality of sensors. Angles related to the search range of the array sensor 3 and the field of view of the camera 2 are calculated with respect to a straight line perpendicular to the surface of the azimuth determining apparatus. For example, in the plan view of Fig. 3, the angle of the field of view (or search range) extending right and left, with a perpendicular line between the azimuth determining apparatus 1 and the measured object 21 being 0°, is calculated as an angle in the horizontal direction. Also, in a side view, an angle in the vertical direction is calculated in a similar manner. The right and left (or upper and lower) angles may be positive (+) and negative (-), respectively, or the other way around.

The computing means 4 generates a sound pressure map on the basis of sound pressure information obtained by the array sensor 3, and superimposes the picked-up image obtained by the camera 2 and the sound pressure map to generate a composite image. As described above, ultrasound measurement by the array sensor 3 can be made within the range of ±90°. To generate a sound pressure map, it is only necessary to search for ultrasound sources within the field of view of the camera 2. For example, a sound pressure map can be generated by simply searching for ultrasound sources within the field of view of the camera 2 indicated by a dotted arrow in Fig. 3. This eliminates the need for computation for determination of unnecessary azimuths, reduces the load of computation on the computing means 4, and increases the frequency of updating the sound pressure map. According to the invention, the search range of the array sensor 3 is in a range narrower than ±90° and wider than ±8° in the horizontal and vertical directions. For suppression of the occurrence of grating lobes, the search range of the array sensor 3 is preferably narrower than ±60° in the horizontal and vertical directions, and more preferably narrower than ±30° in the horizontal and vertical directions. The search range in the vertical direction and the search range in the horizontal direction may be ranges of different sizes.

The computing means 4 outputs the generated composite image to the display means 5, and causes the display means 5 to display the composite image. In the composite image, a color corresponding to the intensity of ultrasound is shown for each position in the picked-up image. This makes it possible to readily identify the correspondence between the position in the picked-up image and the distribution of sound pressure of ultrasound. The display means 5 used here may be, for example, a liquid crystal display.

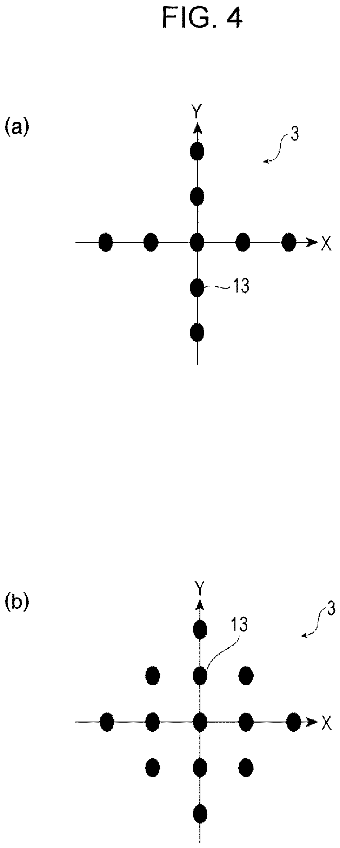

Fig. 4 provides plan views each illustrating an arrangement of sensors 13 in the array sensor 3. Each sensor arrangement in the array sensor 3 will now be described using Fig. 4.

It is preferable, as illustrated in Fig. 4(a), that at least some of the sensors 13 of the array sensor 3 be arranged in a cruciform on the X-axis and the Y-axis. This enables two-dimensional planar ultrasound measurement, suppresses the occurrence of grating lobes, and reduces dependence on the incoming direction of ultrasound in generating a sound pressure map by computation. The X-axis and the Y-axis may be any two axes that are in the same plane and orthogonal to each other. In particular, it is preferable that the X-axis be parallel to the horizontal plane, and that the Y-axis be orthogonal to the horizontal plane. The sensors 13 may be arranged excluding the X-axis and the Y-axis.

The number of the sensors 13 forming the array sensor 3 is greater than or equal to 9 and less than or equal to 25. When the number of the sensors 13 is greater than or equal to 9, ultrasound azimuth determination in a plane can be made with a practically sufficient level of stability. When the number of the sensors 13 is less than or equal to 25, it is possible not only to prevent an increase in the size of the apparatus caused by the presence of an amplifier and a filter circuit required for each sensor 13, but also to reduce calculation load on the computing means 4 and to reduce delay in processing. Thus, without using the computing means 4 of large scale, the composite image can be updated at a practically sufficient rate in the compact lightweight apparatus. To prevent variation in measurement accuracy, it is preferable that the sensors 13 be symmetrically arranged up and down and right and left.

The computing means 4 superimposes the picked-up image and the sound pressure map at regular intervals to update the composite image. The update frequency is preferably three times or more per second, and more preferably five times or more per second. In consideration of the processing speed achievable by the computing means 4 of compact size, the number of the sensors 13 is preferably 13 for updating 5 times per second, and the number of the sensors 13 may be increased to 25 in the case of updating only 3 times per second.

The frequency band of ultrasound measured by the array sensor 3 may be any frequency higher than the audible range, and may be, for example, about 20 kHz or higher. It is preferable, however, that the frequency band of ultrasound measured be 35 kHz or higher and 45 kHz or lower, with 40 kHz being the center. When the frequency band of ultrasound measured is 35 kHz or higher, a sufficient S/N ratio can be ensured against background noise caused by audible sound in the environment. When the frequency band of ultrasound measured is 45 kHz or lower, since the wavelength to be measured is prevented from becoming too short, the field of view where no grating lobes appear can be prevented from being narrowed.

If the sensors 13 are excessively spaced apart in the array sensor 3, the occurrence of grating lobes becomes more likely and this makes it difficult to correctly identify the azimuth of a sound source. To suppress the occurrence of grating lobes, it is preferable that the spacing of the sensors 13 be as small as possible. To reduce the spacing of the sensors 13, it is preferable to use the sensors 13 of small size. For example, the sensors 13 have a size of about 4 mm to 6 mm in length on one side (or in diameter or major axis) in plan view.

On the other hand, if the sensors 13 are arranged too close to each other, the azimuth resolution deteriorates due to the narrow width of the entire array sensor 3 in the horizontal and vertical directions. This means that if a plurality of sound sources exist in proximity within the field of view, it is difficult to distinguish one sound source from another.

Accordingly, a simulation of the azimuth determining apparatus was carried out to study the size of the spacing of the sensors 13 (sensor spacing) so as to suppress the occurrence of grating lobes within the search range for searching for ultrasound sources. Since the human field of view is ±60° in the right-left (horizontal) and up-down (vertical) directions, a sound source was set at an azimuth of -60° in the horizontal direction on the assumption that there was a sound source at an azimuth within the field of view but outside the search range, and the frequency of ultrasound originating from the sound source was set to 10 kHz, 25 kHz, 30 kHz, and 40 kHz. The search range of the array sensor 3 was set to ±30°. An azimuth at which grating lobes appearing on the sound pressure map had a maximum peak intensity of -3 dB was defined as a grating lobe boundary azimuth, and if the grating lobe boundary azimuth was smaller than the maximum search azimuth (i.e., if an azimuth corresponding to the maximum peak intensity of -3 dB was detected within the search range), this event was defined as the occurrence of grating lobes. Note that "-3 dB" is merely an example, and any azimuth at which the sound pressure is lower than the maximum peak intensity by a predetermined value may be defined as a grating lobe boundary azimuth.

In evaluating the sensor spacing, a nondimensional sensor spacing obtained by dividing the sensor spacing (mm) by the wavelength (mm) of ultrasound to be measured was used. Specifically, the nondimensional sensor spacing was determined by the following formula (3).

(Nondimensional sensor spacing) = (Sensor sapcing) / (Wavelength of ultrasound)                    (3)

In the frequency band of ultrasound to be measured, a main value (central value) of the best sensitivity may be employed as the wavelength of ultrasound.

Again, as the nondimensional sensor spacing increases, the occurrence of grating lobes becomes more likely, and as the nondimensional sensor spacing decreases, the azimuth resolution deteriorates.

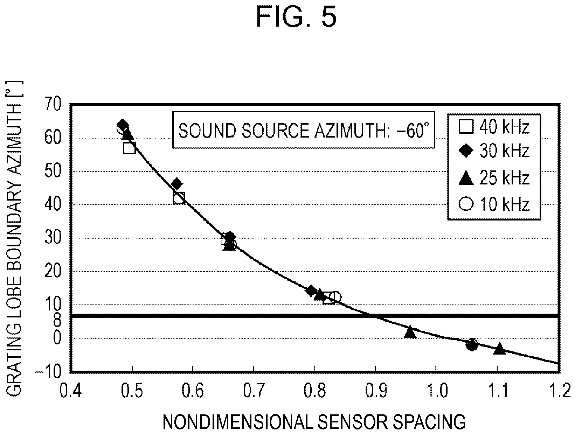

Fig. 5 is a graph showing a relation between a grating lobe boundary azimuth and nondimensional sensor spacing. In Fig. 5, the vertical axis represents the grating lobe boundary azimuth (°) and the horizontal axis represents the nondimensional sensor spacing. The grating lobe boundary azimuth is expressed in relative angle in the horizontal direction, with the azimuth at which a sound source is located (i.e., an azimuth of -60° in the horizontal direction) being 0°. Fig. 5 shows that setting the nondimensional sensor spacing to 0.90 or less makes it possible to prevent grating lobes from appearing in a range (±8°) corresponding to the minimum search range required in practice. To prevent grating lobes from appearing in a wider search range (±10°), it is preferable that the nondimensional sensor spacing be set to 0.85 or less. To prevent grating lobes from appearing in a wider search range (±15°), it is preferable that the nondimensional sensor spacing be set to 0.75 or less.

By adjusting the nondimensional sensor spacing as described above, it is possible to improve resolution for adjacent sound sources while suppressing the occurrence of grating lobes to a practically negligible level within the camera's field of view. By thus adjusting the nondimensional sensor spacing as described above, even if the sensor spacing does not satisfy the formula (2), the occurrence of grating lobes can be suppressed in a practically sufficient range, and an azimuth resolution higher than that achieved with a sensor arrangement satisfying the formula (2) is achieved. Therefore, the sensor spacing is greater than or equal to a half-wavelength of ultrasound to be measured, and is preferably set such that the occurrence of grating lobes is suppressed to a practically negligible level within the search range of the array sensor.

For example, the sensor spacing used when ultrasound of 40 kHz is to be measured is about 4 mm to 12 mm. The sensor spacing is a distance between the centers of adjacent sensors along the X-axis or Y-axis.

To improve measurement accuracy when there are a plurality of sound sources in the measured object 21, it is preferable that all sensor spacing is uniform.

As described above, an exemplary arrangement of the sensors 13 in the array sensor 3 is illustrated in Fig. 4(a). In the example illustrated in Fig. 4(a), a total of nine sensors 13, five on the X-axis and five on the Y-axis, are arranged in a cruciform. With the sensors 13 thus arranged along the two axes, ultrasound from the direction in which the array sensor 3 is directed can be detected in a planar area, and the occurrence of grating lobes can be suppressed.

To more accurately determine the two-dimensional distribution of sound pressure even when there is a plurality of sound sources, the number of sensors may be increased. That is, more sensors 13 may be arranged on y = x and y = -x in the XY plane so as to be symmetric with respect to the X-axis and the Y-axis. An example is illustrated in Fig.

4(b). In the example illustrated in Fig. 4(b), in addition to the sensors 13 on the X-axis and the Y-axis, a total of four sensors 13, two on y = x and two on y = -x, are arranged. Thus, even when the sensors 13 are added outside the X-axis and the Y-axis, a value preferable for the number of sensors 13 and a value preferable for the spacing of sensors 13 are the same as those described above, and it is also preferable that the spacing of the sensors 13 be uniform.

When the number of the sensors 13 is 25, a 5-by-5 matrix of sensors 13 along the X-axis and the Y-axis may be arranged in a square shape.

In the present embodiment, where the spacing between the sensors 13 is adjusted, the occurrence of grating lobes within a camera's field of view can be suppressed even in the case of measuring ultrasound with a short wavelength.

A description will now be given of how the azimuth determining apparatus according to the present embodiment is used.

First, the camera 2 and the array sensor 3 of the azimuth determining apparatus 1 are directed, for example, toward a piping or electrical facility to be measured. The camera 2 picks up an image of an object to be inspected, and the array sensor 3 measures ultrasound. The picked-up image and a sound pressure map of ultrasound are superimposed to form a composite image, which is then displayed in the display means 5 of the azimuth determining apparatus. The distance between the surface of the azimuth determining apparatus 1 and the measured object in a straight line may be changed here, for example, in accordance with the size of the measured object or the intensity of ultrasound emitted. For example, for use within a steel plant, the distance may be up to about 16 m. If the distance exceeds 16 m, the resulting attenuation of ultrasound may make it difficult to measure a sufficient level of sound pressure.

In the present embodiment, which uses the sensors 13 of compact size and minimizes the number of sensors 13 of compact size, the size of the azimuth determining apparatus 1 can be reduced. This enables the user to easily carry around the azimuth determining apparatus 1 and to easily perform measurement by simply directing the camera 2 and the array sensor 3 of the azimuth determining apparatus 1 toward the object to be measured. Additionally, reducing the number of the sensors 13 prevents excessive computing load on the computing means 4, and ensures a sufficient rate of updating the composite image.

The wider the field of view of the camera 2 during image pickup operation, the wider the range where detection of abnormalities can be made by a single measurement. However, if the field of view is too wide, the positions of sound sources cannot be precisely identified, for example, in relation to the resolution of the camera 2, and the occurrence of grating lobes within the field of view becomes more likely. Therefore, it is preferable that the field of view be within a range narrower than $\pm 30°$ in the up-down and right-left directions. To reduce the load of calculating the sound pressure map and increase the frequency of updating the composite image, the range for which the computing means 4 computes the sound pressure map (ultrasound search range) is also preferably within a range narrower than $\pm 30°$ in the up-down and right-left directions.

After the measurement, a composite image displayed in the display means 5 is analyzed. In the composite image, different sound pressures of ultrasound are shown, for example, in different colors. This makes it possible to readily identify the level of sound pressure at each position. It is thus possible to determine that in the vicinity of a peak portion where the sound pressure is highest in the composite image, there is an ultrasound source or in other words, for example, a pipe is cracked or a failure occurs in the electrical facility. If a high sound pressure region substantially concentrically spreads around the peak portion, it is possible to estimate that there is an ultrasound source near the center of the circle.

On the other hand, if the high sound pressure region does not substantially concentrically spread, or occupies a large area within the field of view, it can be estimated that there are a plurality of sound sources within the region, and it is difficult to identify the locations of the sound sources within the region. Particularly in the azimuth determining apparatus 1 of the present embodiment, where the sensor spacing is narrowed to suppress the effect of grating lobes, a sufficient level of azimuth resolution may not be achieved depending on, for example, the measurement conditions. In this case, if there is a plurality of sound sources within the field of view, high sound pressure regions formed by the respective sound sources are combined and occupy a larger area. This makes it difficult to distinguish one sound source from another.

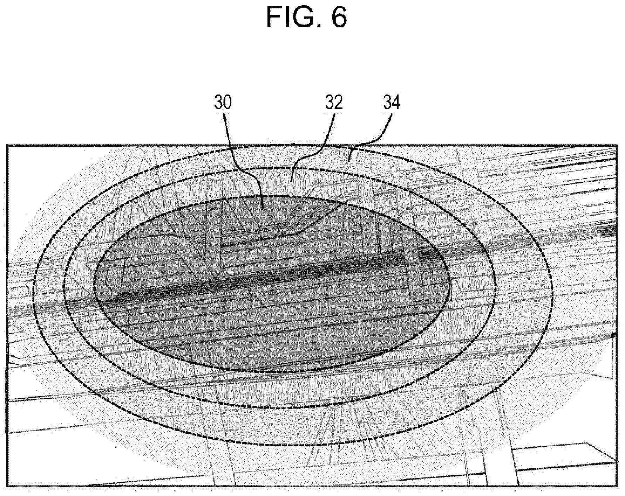

Fig. 6 is a schematic diagram of a composite image. In the example illustrated in Fig. 6, the levels of sound pressure are represented by gradations of black color. A darker region 30 represents a higher level of sound pressure, and the sound pressure gradually weakens as the black color gradually lightens to a region 32 and to a region 34. As a composite image displayed in the display means 5 in practice, a color image may be used, and the color may be continuously varied in accordance with the level of sound pressure.

In the example illustrated in Fig. 6, the high sound pressure region 30 is formed over a relatively wide range in the composite image. The high sound pressure region 30 is elliptic and not substantially concentric. Although it is possible, in this example, to estimate that there are a plurality of sound sources within the region, it is difficult to identify the locations of the sound sources within the region.

A composite image analyzing method according to the present embodiment first involves setting a threshold for sound pressure, and then identifying, within the composite image, a region (high sound pressure region) where a sound pressure exceeding the threshold is observed.

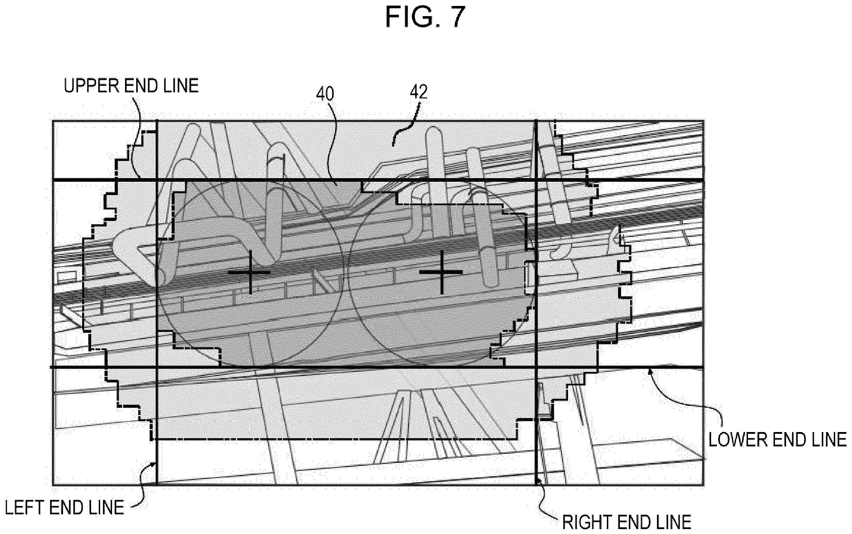

Fig. 7 is an explanatory diagram illustrating a composite image analyzing method. In Fig. 7, a darker gray region enclosed by a black dotted line is a high sound pressure region 40, and a lighter gray region enclosed by a black dotted line is a low sound pressure region 42.

As illustrated in Fig. 7, when the high sound pressure region 40 is not substantially circular, it can be estimated that there are a plurality of ultrasound sources within the high sound pressure region 40. The composite image analyzing method of the present embodiment assumes that there are two ultrasound sources in the high sound pressure region 40.

First, as illustrated in Fig. 7, the positions of upper, lower, left, and right end portions of the high sound pressure region 40 are identified, and an upper end line, a lower end line, a left end line, and a right end line are drawn. Next, a first circle tangent to three of these end lines and having the smallest area is drawn. In the example illustrated in Fig. 7, a circle on the left side, tangent to the upper end line, the left end line, and the lower end line, is defined as the first circle. Also, a second circle tangent to one end line not tangent to the first circle (i.e., the right end line in the example of Fig. 7) and two of the three end lines tangent to the first circle (i.e., the upper end line and the lower end line in the example of Fig. 7) and having the smallest area is drawn. Two points, the center of the first circle and the center of the second circle, can thus be estimated as ultrasound sources.

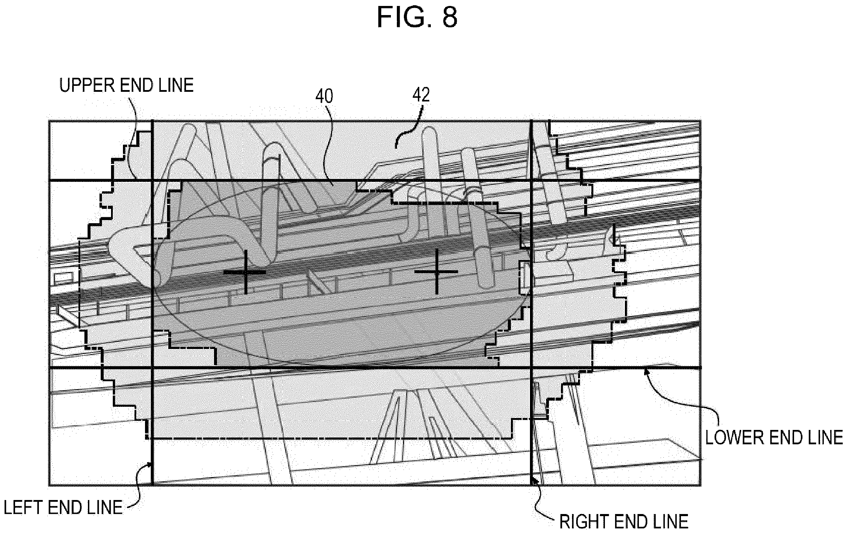

Fig. 8 is an explanatory diagram illustrating another composite image analyzing method. In the example illustrated in Fig. 8, an ellipse tangent to a left end line, a right end line, an upper end line, and a lower end line is drawn in a composite image, and two foci of the ellipse can be estimated as ultrasound sources.

Thus, even when there are sound sources at a plurality of portions close to each other within a measurement field of view, it is possible, with the methods described above, to accurately estimate the azimuths of the sound sources.

Examples

(Example 1)

An ultrasound source azimuth determination was performed using an azimuth determining apparatus according to the present invention. The type of sensors used to form an array sensor was MA40H1S-R (by Murata Manufacturing Co., Ltd.). The sensors were arranged as illustrated in Fig. 4(a) at uniform sensor spacing of 5.6 mm. An object to be inspected was a gas pipe facility in a steel plant. The distance from a measured object was set to 15.7 m, and the frequency of ultrasound to be measured was set to 40 kHz. The nondimensional sensor spacing was determined by 5.6 (mm)/8.5 (mm) to be about 0.66. The camera's field of view and the search range of the array sensor were set to be within ±25° in the horizontal direction and within ±15° in the vertical direction.

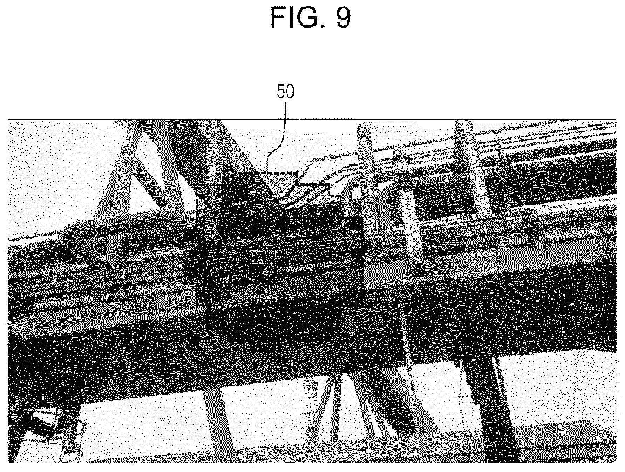

Fig. 9 illustrates a composite image obtained in Example 1. In Fig. 9, a dark gray portion enclosed by a black dotted line is a region 50 with a particularly high sound pressure, and a part of the dark gray portion enclosed by a white dotted line is a peak portion with the highest sound pressure. The occurrence of corrosion pits in a pipe was actually found near the peak portion, and the azimuth of an ultrasound source was successfully determined. Even when the distance to the sound source was further reduced to a minimum of about 1 m, the azimuth of the ultrasound source was able to be determined without problem.

(Example 2)

Composite images were generated using an azimuth determining apparatus with the sensor arrangement illustrated in Fig. 4(a) (hereinafter referred to as "arrangement A") and an azimuth determining apparatus with the sensor arrangement illustrated in Fig. 4(b) (hereinafter referred to as "arrangement B"). Conditions, such as the type of sensors and the sensor spacing, are the same as those for Example 1.

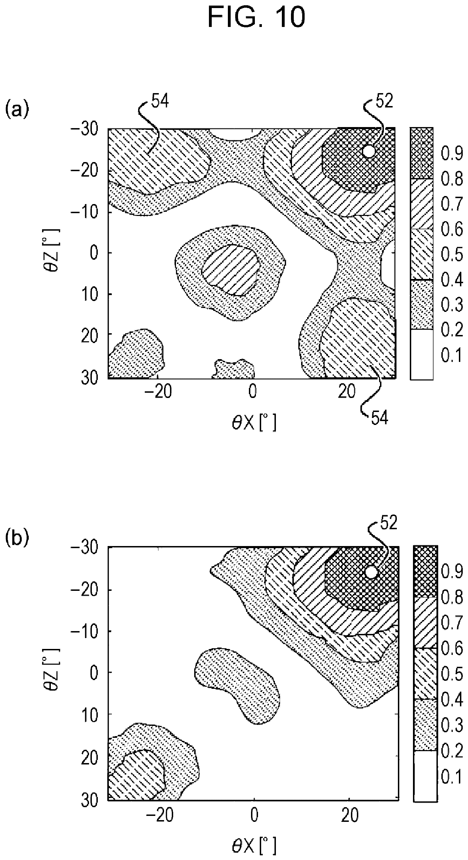

Fig. 10 provides enlarged views of the composite images obtained in Example 2. Fig. 10(a) is an enlarged view of the composite image obtained by the azimuth determining apparatus with arrangement A, and Fig. 10(b) is an enlarged view of the composite image obtained by the azimuth determining apparatus with arrangement B. In the case of arrangement A illustrated in Fig. 10(a), artifact regions 54 with high sound pressure were seen at the lower right and upper left of the drawing, as well as an ultrasound source 52 observed at the upper right of the drawing. In the case of arrangement B illustrated in Fig. 10(b), however, these artifact regions 54 were not observed and the occurrence of grating lobes was able to be more effectively suppressed.

(Example 3)

A composite image was acquired by directing an azimuth determining apparatus of the present embodiment toward a measured object provided with two points of simulated pipe leakage. The azimuth determining apparatus used here was one with arrangement B for Example 2.

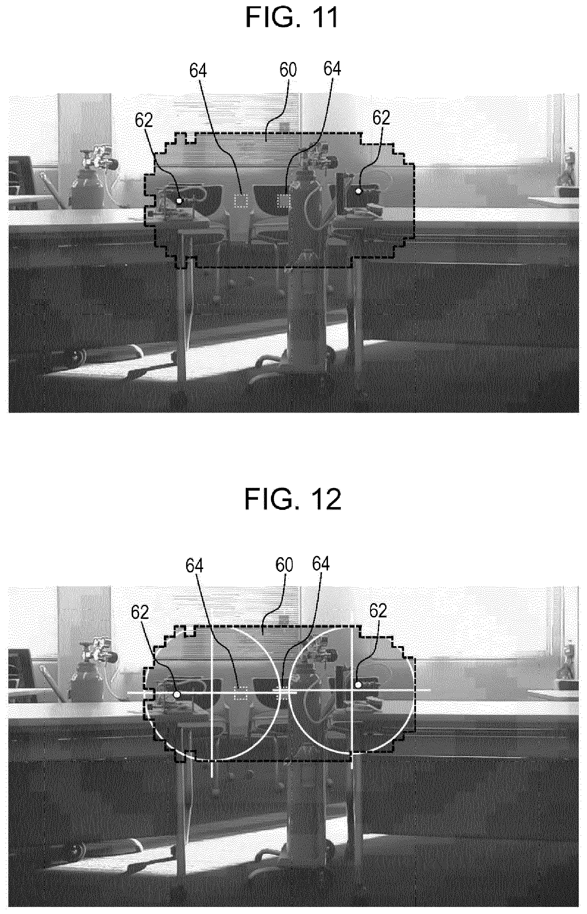

Fig. 11 is an analysis diagram for the composite image obtained in Example 3. In Fig. 11, a high sound pressure region 60 with sound pressure higher than or equal to a predetermined value in the obtained composite image is shown in a different color. In the composite image, positions 62 at which simulated pipe leakage exists are each represented by a white circle, positions 64 at which the sound pressure is highest are each indicated by a rectangle drawn with a white dotted line, and the high sound pressure region 60 is indicated by a black dotted line.

Fig. 12 is an analysis diagram for the composite image obtained in Example 3. In the example illustrated in Fig. 12, two circles were drawn in the high sound pressure region 60 in accordance with the composite image analyzing method according to the present embodiment, and the centers of the two circles were estimated as ultrasound sources. As illustrated in Fig. 12, the ultrasound sources were able to be identified with a certain degree of accuracy.

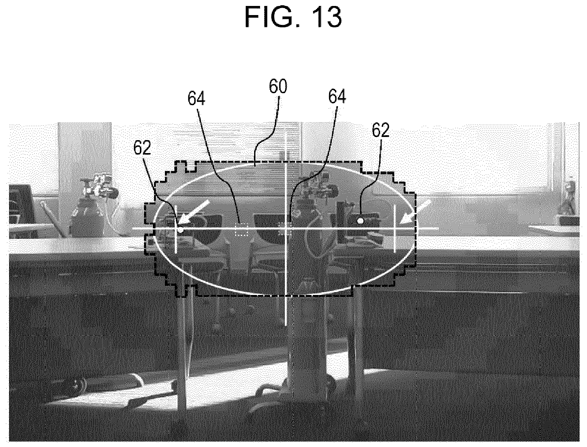

Fig. 13 is another analysis diagram for the composite image obtained in Example 3. In the example illustrated in Fig. 13, an ellipse was drawn in the high sound pressure region 60 in accordance with another composite image analyzing method according to the present embodiment, and two foci of the ellipse were estimated as ultrasound sources. As illustrated in Fig. 13, the ultrasound sources were able to be identified with a certain degree of accuracy. Reference Signs List

1: ultrasound source azimuth determining apparatus
2: camera
3: array sensor
4: computing means
5: display means
11: housing
13: sensor
21: measured object
30: region
32: region
34: region
40: high sound pressure region
42: low sound pressure region
50: region
52: ultrasound source
54: artifact region
60: high sound pressure region
62: position at which simulated pipe leakage exists
64: position at which sound pressure is highest

**Claims**

1. An ultrasound source azimuth determining apparatus (1) comprising:

   a camera (2) configured to pick up an image of a measured object (21);
   an array sensor (3) configured to measure a sound pressure of ultrasound originating from a direction of the measured object (21);
   computing means (4) for generating a sound pressure map on the basis of sound pressure information of ultrasound acquired by the array sensor (3), and superimposing the sound pressure map and a picked-up image acquired by the camera (2) to generate a composite image; and
   display means (5) for displaying the composite image,
   wherein the array sensor (3) includes a total of greater than or equal to 9 and less than or equal to 25 surface mount sensors (13), and at least some of the surface mount sensors (13) are arranged on an X-axis and a Y-axis in the same plane,
   wherein spacing between surface mount sensors (13) is greater than or equal to a half-wavelength of ultrasound to be measured, wherein the spacing between surface mount sensors (13) is set based on a relationship between a grating lobe boundary azimuth and a non-dimensional sensor spacing, so as to suppress the occurrence of grating lobes within the search range of the array sensor (3),
   **characterized in that** a search range of the array sensor (3) is a range narrower than ±90° and wider than ±8° in each of horizontal and vertical directions and that the surface mount sensors (13) are arranged such that the non-dimensional sensor spacing is 0.90 or less, the non-dimensional sensor spacing being obtained by dividing the spacing between surface mount sensors (13) by a wavelength of ultrasound to be measured.

2. The ultrasound source azimuth determining apparatus (1) according to Claim 1, wherein the array sensor (3) includes not only the surface mount sensors (13) on the X-axis and the Y-axis, but also surface mount sensors (13) arranged on y = x and y = -x in the same plane so as to be symmetric with respect to the X-axis and the Y-axis.

3. An analyzing method for a composite image obtained in the ultrasound source azimuth determining apparatus (1) according to Claim 1 or 2, the analyzing method comprising:

identifying a high sound pressure region (40, 60) in the composite image, the high sound pressure region (40, 60) being a region where a sound pressure exceeding a threshold is observed;
identifying the positions of upper, lower, left, and right end portions of the high sound pressure region (40, 60);
drawing an upper end line, a lower end line, a left end line, and a right end line of the high sound pressure region (40, 60);
drawing a first circle tangent to three of the upper end line, the lower end line, the left end line, and the right end line in the high sound pressure region (40, 60), the first circle having a smallest area;
drawing a second circle tangent to one of the upper end line, the lower end line, the left end line, and the right end line in the high sound pressure region (40, 60), the one not being tangent to the first circle, and two of the three end lines tangent to the first circle, the second circle having a smallest area; and
estimating two points as ultrasound sources (52), the two points being a center of the first circle and a center of the second circle.

4. A composite image analyzing method for analyzing a composite image obtained in the ultrasound source azimuth determining apparatus (1) according to Claim 1 or 2, the analyzing method comprising:

identifying a high sound pressure region (40, 60) in the composite image, the high sound pressure region (40, 60) being a region where a sound pressure exceeding a threshold is observed;
identifying the positions of upper, lower, left, and right end portions of the high sound pressure region (40, 60);
drawing an upper end line, a lower end line, a left end line, and a right end line of the high sound pressure region (40, 60);
drawing an ellipse tangent to the upper end line, the lower end line, the left end line, and the right end line in the high sound pressure region (40, 60); and estimating two foci of the ellipse as ultrasound sources.

**Patentansprüche**

1. Eine Ultraschallquellen-Azimut-Bestimmungsvorrichtung (1), aufweisend:

eine Kamera (2), die so konfiguriert ist, dass sie ein Bild eines gemessenen Objekts (21) aufnimmt;
einen Array-Sensor (3), der so konfiguriert ist, dass er einen Schalldruck des Ultraschalls misst, der aus einer Richtung des gemessenen Objekts (21) stammt;
eine Recheneinrichtung (4) zum Erzeugen einer Schalldruckkarte auf der Grundlage von Schalldruckinformationen des Ultraschalls, die von dem Array-Sensor (3) erfasst werden, und zum Überlagern der Schalldruckkarte und eines aufgenommenen Bildes, das von der Kamera (2) erfasst wird, um ein zusammengesetztes Bild zu erzeugen; und
Anzeigemittel (5) zum Anzeigen des zusammengesetzten Bildes,
wobei der Array-Sensor (3) insgesamt mehr als oder gleich 9 und weniger als oder gleich 25 oberflächenmontierte Sensoren (13) umfasst, und zumindest einige der oberflächenmontierten Sensoren (13) auf einer X-Achse und einer Y-Achse in derselben Ebene angeordnet sind,
wobei der Abstand zwischen den oberflächenmontierten Sensoren (13) größer oder gleich einer halben Wellenlänge des zu messenden Ultraschalls ist, wobei der Abstand zwischen den oberflächenmontierten Sensoren (13) auf der Grundlage einer Beziehung zwischen einem Gitterkeulen-Grenzazimut und einem dimensionslosen Sensorabstand eingestellt ist, um das Auftreten von Gitterfehlstellen innerhalb des Suchbereichs des Array-Sensors (3) zu unterdrücken,
**dadurch gekennzeichnet, dass** ein Suchbereich des Array-Sensors (3) ein Bereich ist, der schmaler als $\pm 90°$ und breiter als $\pm 8°$ in jeder der horizontalen und vertikalen Richtungen ist, und dass die oberflächenmontierten Sensoren (13) so angeordnet sind, dass der dimensionslose Sensorabstand 0,90 oder weniger beträgt, wobei der dimensionslose Sensorabstand erhalten wird, indem der Abstand zwischen den oberflächenmontierten Sensoren (13) durch eine Wellenlänge des zu messenden Ultraschalls geteilt wird.

**2.** Die Ultraschallquellen-Azimut-Bestimmungsvorrichtung (1) nach Anspruch 1, wobei der Array-Sensor (3) nicht nur die oberflächenmontierten Sensoren (13) auf der X-Achse und der Y-Achse umfasst, sondern auch oberflächenmontierte Sensoren (13), die auf y = x und y = -x in derselben Ebene angeordnet sind, so dass sie in Bezug auf die X-Achse und die Y-Achse symmetrisch sind.

**3.** Ein Analyseverfahren für ein zusammengesetztes Bild, das in

der Ultraschallquellen-Azimut-Bestimmungsvorrichtung (1) nach Anspruch 1 oder 2 erhalten ist, wobei das Analyseverfahren umfasst:
Identifizieren eines Bereichs (40, 60) mit hohem Schalldruck in dem zusammengesetzten Bild, wobei der Bereich (40, 60) mit hohem Schalldruck ein Bereich ist, in dem ein einen Schwellenwert überschreitender Schalldruck beobachtet wird;
Identifizieren der Positionen der oberen, unteren, linken und rechten Endabschnitte des Bereichs mit hohem Schalldruck (40, 60);
Zeichnen einer oberen Endlinie, einer unteren Endlinie, einer linken Endlinie und einer rechten Endlinie des Bereichs mit hohem Schalldruck (40, 60);
Zeichnen eines ersten Kreises tangential zu drei der oberen Endlinie, der unteren Endlinie, der linken Endlinie und der rechten Endlinie in dem Bereich mit hohem Schalldruck (40, 60), wobei der erste Kreis eine kleinste Fläche aufweist;
Zeichnen eines zweiten Kreises, der eine der oberen Endlinie, der unteren Endlinie, der linken Endlinie und der rechten Endlinie in dem Bereich mit hohem Schalldruck (40, 60) tangiert, wobei der eine Kreis den ersten Kreis nicht tangiert und zwei der drei Endlinien den ersten Kreis tangieren, wobei der zweite Kreis eine kleinste Fläche aufweist; und
Schätzen von zwei Punkten als Ultraschallquellen (52), wobei die zwei Punkte ein Zentrum des ersten Kreises und ein Zentrum des zweiten Kreises sind.

**4.** Ein Analyseverfahren für ein zusammengesetztes Bild zum Analysieren eines zusammengesetzten Bildes, das in der Ultraschallquellen-Azimut-Bestimmungsvorrichtung (1) nach Anspruch 1 oder 2 erhalten wird, wobei das Analyseverfahren umfasst:

Identifizieren eines Bereichs mit hohem Schalldruck (40, 60) in dem zusammengesetzten Bild, wobei der Bereich mit hohem Schalldruck (40, 60) ein Bereich ist, in dem ein Schalldruck beobachtet wird, der einen Schwellenwert überschreitet;
Identifizieren der Positionen der oberen, unteren, linken und rechten Endabschnitte des Bereichs mit hohem Schalldruck (40, 60);
Zeichnen einer oberen Endlinie, einer unteren Endlinie, einer linken Endlinie und einer rechten Endlinie des Bereichs mit hohem Schalldruck (40, 60);
Zeichnen einer Ellipse, die die obere Endlinie, die untere Endlinie, die linke Endlinie und die rechte Endlinie in dem Bereich mit hohem Schalldruck (40, 60) tangiert; und
Schätzen von zwei Brennpunkten der Ellipse als Ultraschallquellen.

## Revendications

**1.** Appareil de détermination d'azimut de source d'ultrasons (1) comprenant :

une caméra (2) configurée pour capturer une image d'un objet mesuré (21) ;
un capteur matriciel (3) configuré pour mesurer une pression acoustique d'ultrasons provenant d'une direction de l'objet mesuré (21) ;
un moyen de calcul (4) pour générer une carte de pression acoustique sur la base d'informations de pression acoustique d'ultrasons acquises par le capteur matriciel (3), et pour superposer la carte de pression acoustique et une image capturée acquise par la caméra (2) afin de générer une image composite ; et
un moyen d'affichage (5) pour afficher l'image composite,
dans lequel le capteur matriciel (3) comprend un total supérieur ou égal à 9 et inférieur ou égal à 25 capteurs montés en surface (13), et au moins certains des capteurs montés en surface (13) sont agencés sur un axe X et un axe Y dans le même plan,

dans lequel l'espacement entre les capteurs montés en surface (13) est supérieur ou égal à une demi-longueur d'onde d'ultrasons à mesurer, dans lequel l'espacement entre les capteurs montés en surface (13) est défini sur la base d'une relation entre un azimut de limite de lobe de réseau et un espacement de capteur non dimensionnel, de manière à supprimer l'apparition de lobes de réseau dans la plage de recherche du capteur matriciel (3),

**caractérisé en ce qu'**une plage de recherche du capteur matriciel (3) est une plage plus étroite que $\pm90°$ et plus large que $\pm8°$ dans chacune des directions horizontale et verticale et **en ce que** les capteurs montés en surface (13) sont agencés de sorte que l'espacement de capteur non dimensionnel soit de 0,90 ou moins, l'espacement de capteur non dimensionnel étant obtenu en divisant l'espacement entre les capteurs montés en surface (13) par une longueur d'onde d'ultrasons à mesurer.

2. Appareil de détermination d'azimut de source d'ultrasons (1) selon la revendication 1, dans lequel le capteur matriciel (3) comprend non seulement les capteurs montés en surface (13) sur l'axe X et l'axe Y, mais également des capteurs montés en surface (13) agencés sur y = x et y = -x dans le même plan de manière à être symétriques par rapport à l'axe X et à l'axe Y.

3. Procédé d'analyse pour une image composite obtenue dans l'appareil de détermination d'azimut de source d'ultrasons (1) selon la revendication 1 ou 2, le procédé d'analyse comprenant :

identifier une région de pression acoustique élevée (40, 60) dans l'image composite, la région de pression acoustique élevée (40, 60) étant une région où une pression acoustique dépassant un seuil est observée ;
identifier les positions des parties d'extrémité supérieure, inférieure, gauche et droite de la région de pression acoustique élevée (40, 60) ;
tracer une ligne d'extrémité supérieure, une ligne d'extrémité inférieure, une ligne d'extrémité gauche et une ligne d'extrémité droite de la région de pression acoustique élevée (40, 60) ;
tracer un premier cercle tangent à trois lignes parmi la ligne d'extrémité supérieure, la ligne d'extrémité inférieure, la ligne d'extrémité gauche et la ligne d'extrémité droite dans la région de pression acoustique élevée (40, 60), le premier cercle présentant la surface la plus petite ;
tracer un deuxième cercle tangent à une ligne parmi la ligne d'extrémité supérieure, la ligne d'extrémité inférieure, la ligne d'extrémité gauche et la ligne d'extrémité droite dans la région de pression acoustique élevée (40, 60), la ligne n'étant pas tangente au premier cercle et deux lignes parmi les trois lignes d'extrémité étant tangentes au premier cercle, le deuxième cercle présentant la surface la plus petite ; et
estimer deux points comme sources d'ultrasons (52), les deux points étant le centre du premier cercle et le centre du deuxième cercle.

4. Procédé d'analyse d'image composite pour analyser une image composite obtenue dans l'appareil de détermination d'azimut de source d'ultrasons (1) selon la revendication 1 ou 2, le procédé d'analyse comprenant :

identifier une région de pression acoustique élevée (40, 60) dans l'image composite, la région de pression acoustique élevée (40, 60) étant une région où une pression acoustique dépassant un seuil est observée ;
identifier les positions des parties d'extrémité supérieure, inférieure, gauche et droite de la région de pression acoustique élevée (40, 60) ;
tracer une ligne d'extrémité supérieure, une ligne d'extrémité inférieure, une ligne d'extrémité gauche et une ligne d'extrémité droite de la région de pression acoustique élevée (40, 60) ;
tracer une ellipse tangente à la ligne d'extrémité supérieure, à la ligne d'extrémité inférieure, à la ligne d'extrémité gauche et à la ligne d'extrémité droite dans la région de pression acoustique élevée (40, 60) ; et
estimer deux foyers de l'ellipse comme sources d'ultrasons.

# FIG. 1

# FIG. 2

(a)

(b)

(c)

EP 3 517 991 B1

# FIG. 3

# FIG. 4

(a)

(b)

# FIG. 5

FIG. 6

FIG. 7

## FIG. 8

UPPER END LINE

40    42

LEFT END LINE

LOWER END LINE

RIGHT END LINE

EP 3 517 991 B1

FIG. 9

# FIG. 10

(a)

(b)

## FIG. 11

## FIG. 12

FIG. 13

## REFERENCES CITED IN THE DESCRIPTION

**Patent documents cited in the description**

- KR 101522996 B1
- CN 104883482 A
- JP 2007127503 A
- JP 2014137323 A

**Non-patent literature cited in the description**

- Development of ''Ultrasound Camera. **RIKA ISHIDA.** Visualization of Ultrasound Emitted by Devices. Denki Genba Gijutsu, March 2015